# EUROPÄISCHE PATENTSCHRIFT

(11) **EP 1 260 304 B1**
(45) Veröffentlichungstag und Bekanntmachung des Hinweises auf die Patenterteilung: **17.11.2004**
(21) Anmeldenummer: 01112649.7
(22) Anmeldetag: 25.05.2001
(51) Int. Cl.: B23Q 1/00, B23Q 11/00

(54) **Werkstückhalter**
Workpiece holder
Porte-pièce

(43) Veröffentlichungstag der Anmeldung: 27.11.2002
(73) Patentinhaber: Cross Hüller GmbH, 71636 Ludwigsburg (DE)
(72) Erfinder: Heitzmann, Wolfgang, 71636 Ludwigsburg (DE); Leible, Willi, 71720 Oberstenfeld (DE); Schulz, Werner, 74321 Bierigheim (DE)
(74) Vertreter: Rau, Manfred, Dr. Dipl.-Ing.

(56) Entgegenhaltungen:
- EP-A- 0 321 367
- CH-A- 320 427
- US-A- 5 195 227

## Beschreibung

Die Erfindung betrifft einen Werkstückhalter nach dem Oberbegriff des Anspruches 1.

Wenn ein Werkstück in mehreren Bearbeitungsschritten auf verschiedenen Bearbeitungs-Maschinen bearbeitet werden soll, so wird es in den Bearbeitungs-Maschinen zur Bearbeitung auf einem Werkstückhalter mittels Spann-Einrichtungen fixiert. Zur Ausführung des nächsten Bearbeitungsschrittes auf der nächsten Bearbeitungs-Maschine wird es von dem Werkstückhalter gelöst, zur nächsten Maschine transportiert und dort wiederum auf einem Werkstückhalter fixiert.

Aus der DE 19 01 139 A (entsprechend US-PS 3,606,300) ist eine Werkstück-Tragplatte bekannt, auf der ein Werkstück ausgerichtet fixiert wird. Hierzu ist die Werkstück-Tragplatte mit einer großen Zahl von Löchern versehen. Die Werkstücke werden zusammen mit der sie tragenden Werkstück-Tragplatte von Bearbeitungs-Maschine zu Bearbeitungs-Maschine transportiert, wobei die Fixierung an den einzelnen Bearbeitungs-Maschinen offen bleibt.

Aus der EP 0 637 482 B1 (entsprechend US-PS 5,558,784) ist es bekannt, ein zu bearbeitendes Werkstück auf einer Werkstück-Tragplatte zu befestigen. Die Werkstück-Tragplatte weist Spannelemente in Form von Riegelzapfen auf, die gleichzeitig als Zentrier-Elemente zum zumindest groben Zentrieren und eindeutigen Ausrichten des Werkstück-Trägers auf der Bearbeitungs-Maschine ausgebildet sind, wobei auf jeden Fall auch noch ein Einmessen der Werkstück-Tragplatte an der Bearbeitungs-Maschine notwendig ist. In der Bearbeitungs-Maschine werden jeweils die Koordinaten-Werte, d.h. die Lage der Werkstück-Tragplatten im dreidimensionalen Koordinatensystem, durch Messen ermittelt und mit den in der Bearbeitungs-Maschine gespeicherten Daten verrechnet, um auf diesem Weg die genaue Lage des Werkstücks in bezug auf die Koordinaten-Systeme der Bearbeitungs-Maschine zu erhalten.

In Fertigungs-Anlagen mit verschiedenen Bearbeitungs-Maschinen, beispielsweise Transfer-Maschinen oder flexiblen Fertigungs-Systemen mit kurzen Taktzeiten ist das bekannte Verfahren nachteilig, da die für das exakte Vermessen der Werkstück-Tragplatten erforderlichen Zeiten in die Taktzeiten der gesamten Anlage eingehen.

Aus der EP 0 321 367 A ist ein Werkstückhalter der gattungsgemäßen Art bekannt, bei dem der Werkstück-Träger in der ersten und der zweiten Koordinaten-Richtung jeweils unabhängig voneinander festgelegt werden muss. Dies führt zu den bereits erwähnten Nachteilen.

Der Erfindung liegt daher die Aufgabe zugrunde, einen Werkstückhalter zu schaffen, bei dem ein Einmessen des Werkstücks während oder nach dem Aufspannen nicht erforderlich ist.

Diese Aufgabe wird erfindungsgemäß durch die Merkmale des Anspruches 1 gelöst. Das Werkstück hat eine exakt definierte Position auf der Werkstück-Tragplatte und behält diese Position über alle Bearbeitungs-Schritte bei. Beim Transport von Bearbeitungs-Maschine zu Bearbeitungs-Maschine wird die Werkstück-Tragplatte jeweils auf einem identischen Werkstück-Träger in allen drei Koordinaten-Richtungen exakt eingespannt, sodass ein jeweils erneutes Einmessen des Werkstücks an einer Bearbeitungs-Maschine nicht erforderlich ist. Durch die erfindungsgemäßen Maßnahmen wird weiterhin erreicht, dass mittels der nur einen Schräg-Spann-Einrichtung die Tragplatte gegenüber dem Träger sowohl in der x-Richtung als auch in der y-Richtung ausgerichtet und fixiert wird.

Zahlreiche vorteilhafte und z.T. erfinderische Ausgestaltungen ergeben sich aus den Unteransprüchen.

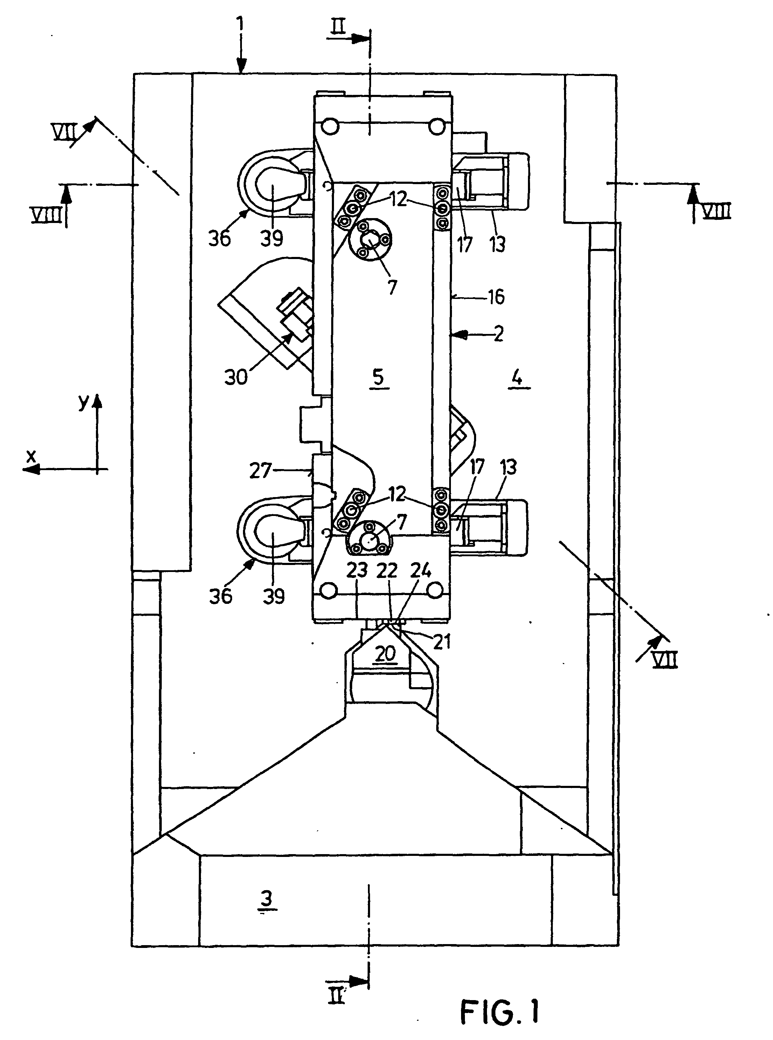

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: eine Draufsicht auf einen Werkstückhalter mit auf einem Werkstück-Träger montierter Werkstück-Tragplatte,

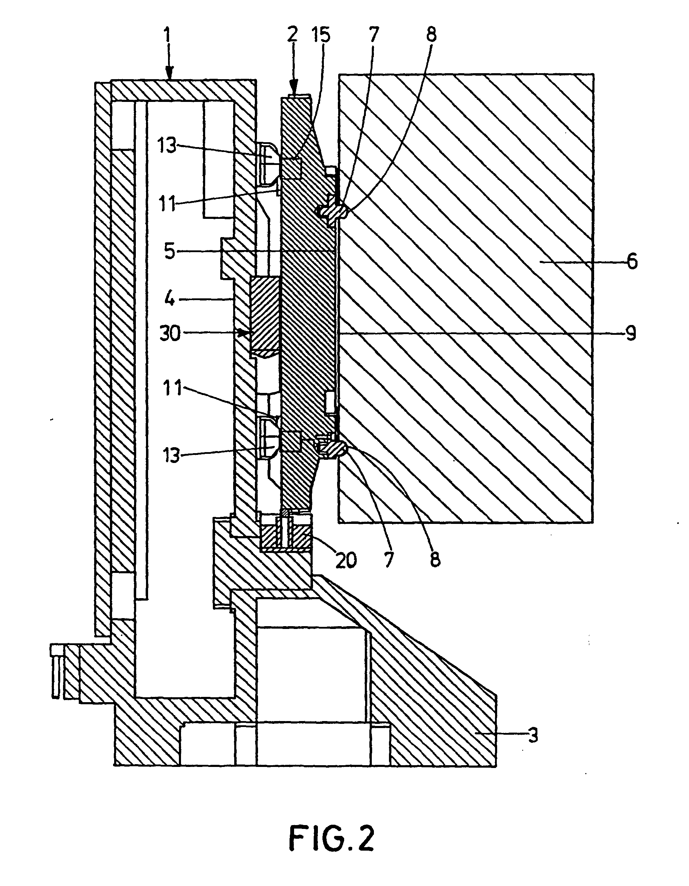

- Fig. 2: einen vertikalen Querschnitt durch den Werkstückhalter gemäß der Schnittlinie II-II in Fig. 1 mit auf der Werkstück-Tragplatte montiertem Werkstück,

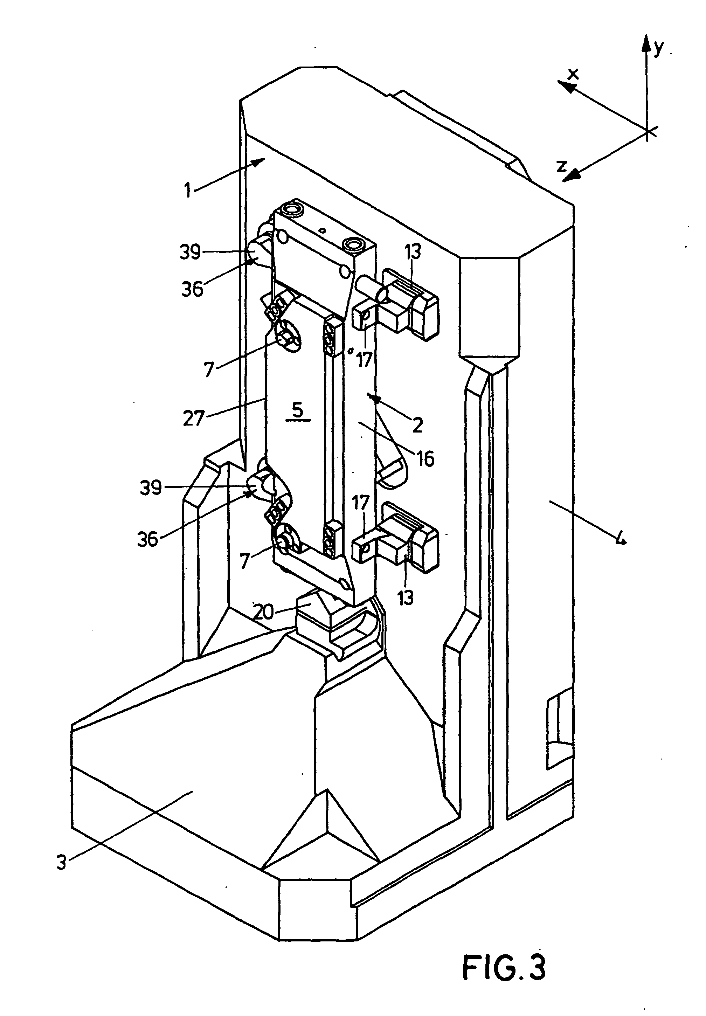

- Fig. 3: eine perspektivische Schräg-Ansicht des Werkstückhalters,

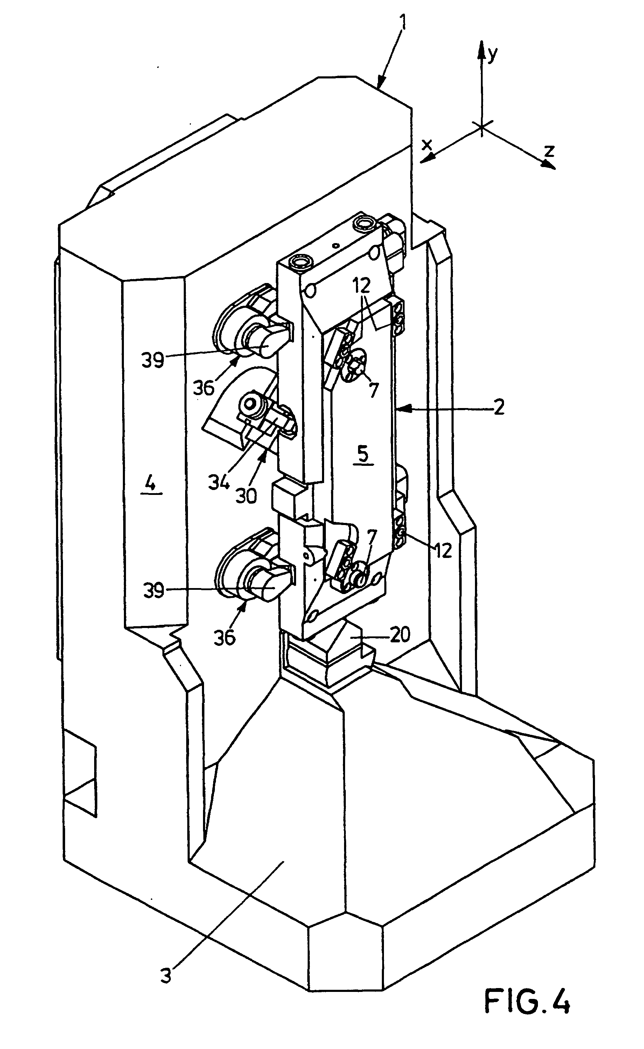

- Fig. 4: eine weitere perspektivische Schräg-Ansicht des Werkstückhalters,

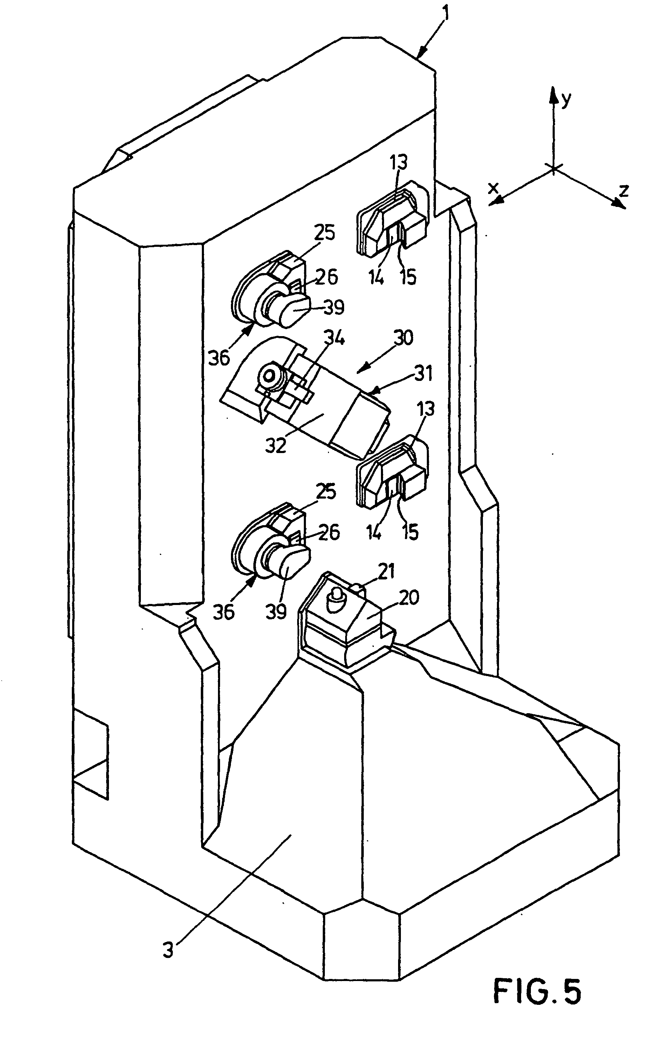

- Fig. 5: eine perspektivische Schräg-Ansicht des Werkstück-Trägers entsprechend der Darstellung in Fig. 4,

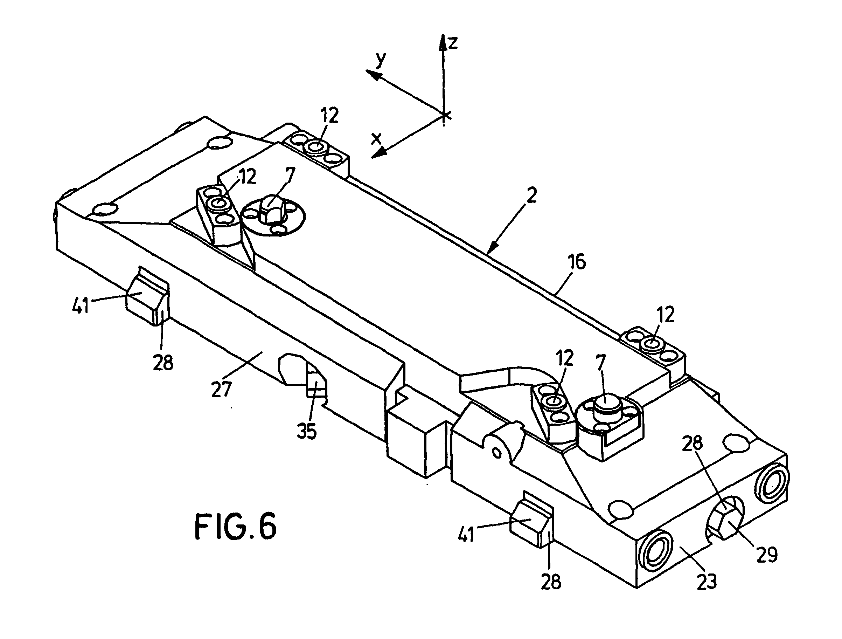

- Fig. 6: eine perspektivische Schräg-Ansicht der Werkstück-Tragplatte,

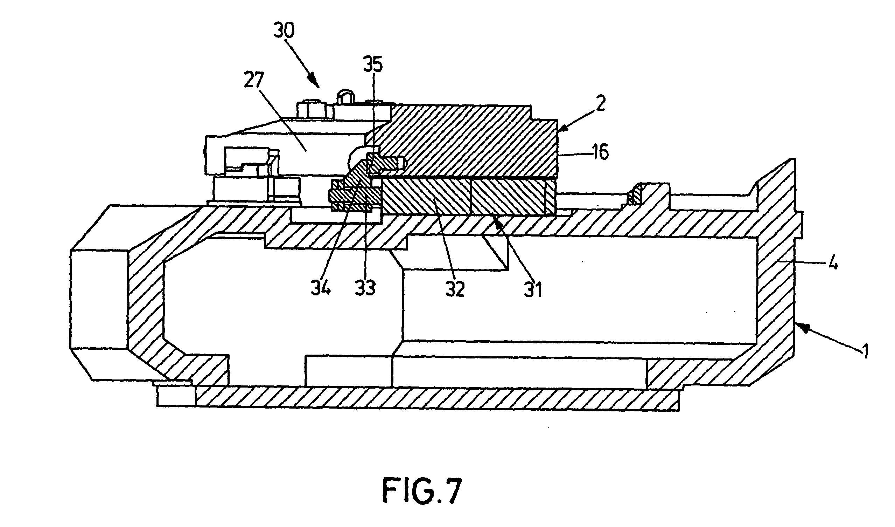

- Fig. 7: einen Querschnitt durch den Werkstückhalter entsprechend der Schnittlinie VII-VII in Fig. 1,

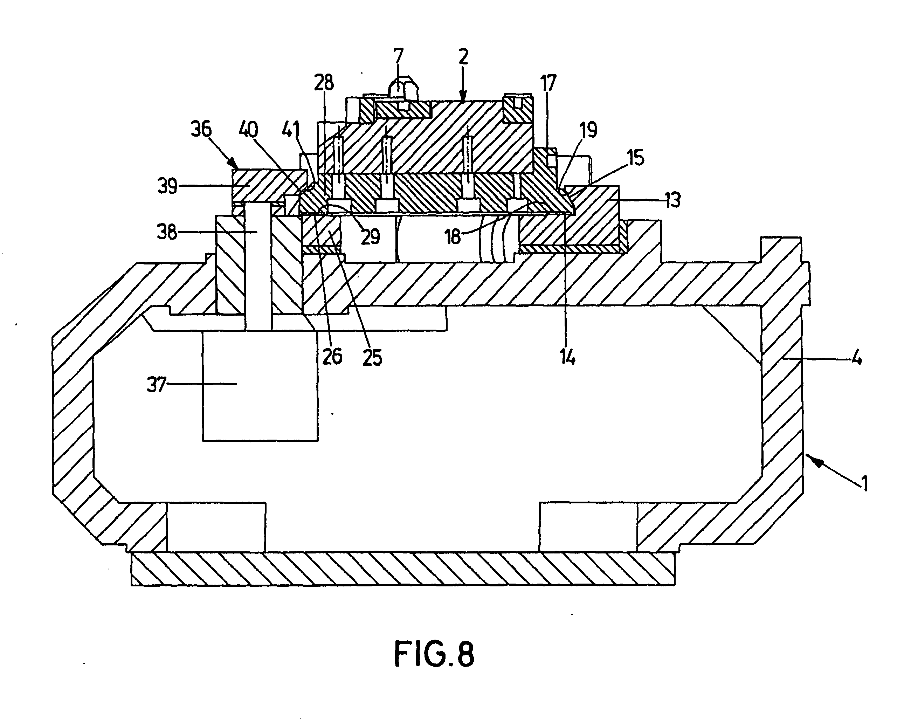

- Fig. 8: einen Querschnitt durch den Werkstückhalter gemäß der Schnittlinie VIII-VIII in Fig. 1 und

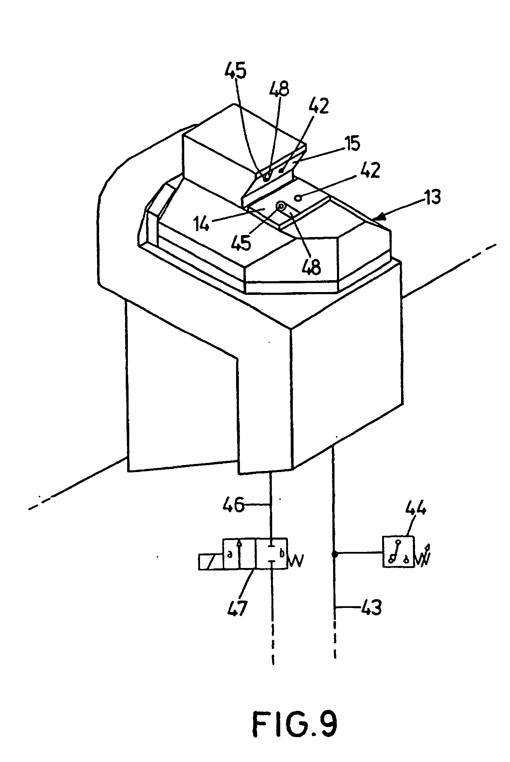

- Fig. 9: eine vergrößerte Teil-Ansicht eines Halteelementes.

Der in der Zeichnung dargestellte Werkstückhalter ist im Grundsatz zweiteilig ausgebildet. Er besteht aus einem als Hohlkasten ausgebildeten Werkstück-Träger 1 und einer Werkstück-Tragplatte 2. Der Werkstück-Träger 1 ist in Form eines winkelförmigen Ständers mit einem Fuß 3 und einer rückwärtigen Tragwand 4 ausgebildet. Der Werkstück-Träger 1 wird auf der Bearbeitungsseite einer Werkzeugmaschine, beispielsweise eines Universal-Bearbeitungs-Zentrums, in einer vorgegebenen Position angebracht.

Die Werkstück-Tragplatte 2 hat eine Grundform etwa in Form eines flachen Quaders und kann aus fertigungstechnischen Gründen mehrteilig ausgebildet sein. Sie weist eine der Tragwand 4 abgewandte und hierzu etwa parallel verlaufende, in einer x-y-Ebene liegende Auflagefläche 5 für ein Werkstück 6 auf. Sie ist mit zwei über die Auflagefläche 5 in z-.Richtung vorragenden Index-Zapfen 7 versehen, die in durchmessergleiche Index-Bohrungen 8 in der der Auflagefläche 5 zugewandten Bezugsfläche 9 des Werkstücks 6 eingreifen, wodurch die Lage des Werkstücks 6 zur Tragplatte 2 in der durch die Auflagefläche 5 vorgegebenen Ebene festgelegt wird. Das Werkstück 6 wird mittels Halteschrauben 11 gegen die Auflagefläche 5 der Tragplatte 2 gespannt. Die Halteschrauben 11 greifen durch Bohrungen 12 in der Tragplatte 2 in das Werkstück 6 ein. In der geschilderten Weise erhält das Werkstück 6 eine exakt definierte Lage zur Tragplatte 2.

An der Tragplatte 2 und dem Träger 1 sind Einrichtungen vorgesehen, die eine schnelle und lagegenaue Verbindung zwischen dem Träger 1 und der Tragplatte 2 ermöglichen, so daß das Werkstück 6, wenn es zusammen mit der Tragplatte 2 von einer Bearbeitungs-Maschine zu einer mit dieser verketteten weiteren Bearbeitungs-Maschine und von dort wieder zur nächsten verketteten Bearbeitungs-Maschine transportiert wird, jeweils nach der Befestigung der Tragplatte 2 an einem jeder Bearbeitungs-Maschine zugeordneten identischen Träger 1 eine genau definierte Lage zu jeder Bearbeitungs-Maschine hat.

Es sind an der Tragwand 4 übereinander zwei gleichartig ausgebildete seitliche Halteelemente 13 angebracht, die jeweils eine untere Anlagefläche 14 aufweisen, die parallel zueinander und etwa parallel zur Auflagefläche 5, also in einer x-y-Ebene, angeordnet sind. Sie weisen weiterhin jeweils eine obere Anlagefläche 15 auf, die ebenfalls parallel zueinander verlaufen und schräg zur unteren Anlagefläche 14 geneigt angeordnet sind. Die beiden keilförmig zueinander verlaufenden Anlageflächen 14, 15 jedes Halteelements 13 öffnen sich zur Tragplatte 2 hin. Die obere Anlagefläche 15 ist also von der Tragplatte 2 weg nach unten zur unteren Anlagefläche 14 hin geneigt.

An der den seitlichen Halteelementen 13 zugewandten Seitenfläche 16 der Tragplatte 2 sind zwei Gegen-Halteelemente 17 angebracht, die den Anlageflächen 14, 15 entsprechende, ebenfalls keilförmig zueinander angeordnete Gegenflächen 18, 19 aufweisen, die beim korrekten Einführen der Gegen-Halteelemente 17 in die seitlichen Halteelemente 13 dicht und flächig gegen die Anlageflächen 14 bzw. 15 anliegen.

An der Tragwand 4 des Trägers 1 ist weiterhin ein unteres Auflager 20 angebracht, das eine untere Anlagefläche 21 aufweist. Diesem Auflager 20 ist ein Gegen-Auflager 22 zugeordnet, das an der unteren Seitenfläche 23 der Tragplatte 2 ausgebildet ist, und das eine Gegenfläche 24 aufweist, mittels derer die Tragplatte 2 auf dem unteren Auflager 20 in exakter Position aufliegt.

Auf der den seitlichen Halteelementen 13 abgewandten Seite der Tragplatte 2 sind an der Tragwand 4 des Trägers 1 zwei Anlageelemente 25 vorgesehen, die den Halteelementen 13 gegenüberliegen. Sie weisen jeweils eine Anlagefläche 26 auf, die parallel zu den unteren Anlageflächen 14, also in der x-y-Ebene, verläuft. An der zugeordneten Seitenfläche 27 der Tragplatte 2 sind Gegen-Anlageelemente 28 mit jeweils einer Gegenfläche 29 ausgebildet, die flächig auf der jeweiligen Anlagefläche 26 anliegt. Wenn die Tragplatte 2 mit ihren Gegenflächen 18, 19, 24, 29 an den Anlageflächen 14, 15, 21, 26 des Trägers 1 anliegt, dann hat sie eine exakt definierte, jederzeit reproduzierbare Position gegenüber jedem identisch ausgebildeten Werkstück-Träger 1, und zwar in allen drei Koordinaten-Richtungen, nämlich der x-Richtung, der y-Richtung und der z-Richtung.

Die lösbare Fixierung der Tragplatte 2 am Träger 1 in der geschilderten genau definierten Position geht wie folgt vor sich:

An der Tragwand 4 des Trägers 1 ist eine in der x-y-Ebene wirkende Schräg-Spann-Einrichtung 30 vorgesehen, die schräg zur x-Richtung und schräg zur y-Richtung wirkt. Sie weist einen mit Druckmittel beaufschlagbaren Kolben-Zylinder-Antrieb 31 auf, dessen Zylinder 32 an der Tragwand 4 befestigt ist und an dessen Kolbenstange 33 ein Spann-Haken 34 angebracht ist, der gegen ein Widerlager 35 im Bereich der Seitenfläche 27 der Tragplatte 2 zur Anlage kommt. Wenn der Antrieb 31 mit Druckmittel beaufschlagt wird, dann wird die Tragplatte 2 mittels dieser nur einen Schräg-Spann-Einrichtung 30 einerseits in die seitlichen Halteelemente 13 und andererseits gegen das untere Auflager 20 gedrückt, d.h. es erfolgt mittels nur einer Spann-Einrichtung 30 ein Ausrichten und Fixieren der Tragplatte 2 gegenüber dem Träger 1 sowohl in der x-Richtung als auch in der y-Richtung. Außerdem ist die Tragplatte 2 hierbei in den seitlichen Halteelementen 13 bereits in der z-Richtung ausgerichtet und fixiert.

Zugeordnet zu den Anlageelementen 25 und den Gegen-Anlageelementen 28 sind zwei Nieder-Spann-Einrichtungen 36 vorgesehen, mittels derer die Tragplatte 2 auf den Träger 1 niedergespannt wird. Diese weisen jeweils in der Tragwand 4 angeordnete druckmittelbeaufschlagbare Schwenk-Antriebe 37 auf, deren Schwenkwelle 38 aus der Tragwand 4 in z-Richtung vorragt und einen Spannhebel 39 trägt. Der Spannhebel 39 weist eine Spannfläche 40 auf, die in z-Richtung geneigt verläuft und mit einer Gegen-Spannfläche 41 am jeweiligen Gegen-Anlageelement 28 zusammenwirkt. Die Spannfläche 40 und die Gegen-Spannfläche 41 sind von der Tragplatte 2 weg zur Tragwand 4 hin geneigt, so daß beim Niederspannen der Tragplatte 2 mit ihren Gegenflächen 29 auf die Anlageflächen 26 gleichzeitig eine Druckkraft in Richtung auf die seitlichen Halteelemente 13 ausgeübt wird, so daß dort eine feste Anlage erfolgt. Die mit Druckmittel beaufschlagbaren Antriebe 31, 37, die bevorzugt hydraulisch beaufschlagbar sind, können sehr schnell betätigt werden, so daß die Herstellung einer Verriegelung zwischen Tragplatte 2 und Träger 1 bzw. ein Lösen dieser Verriegelung in Bruchteilen von Sekunden erfolgen kann.

Es sind weiterhin Einrichtungen vorgesehen, um sicherzustellen, daß die Tragplatte 2 tatsächlich auch in der geschilderten Weise exakt ausgerichtet am Träger 1 fixiert wird. Bei der spanenden Bearbeitung eines Werkstücks 6 fallen Späne und sonstige Schmutzpartikel an, die sich zwischen eine Anlagefläche und eine Gegenfläche legen könnten, wodurch die Position der Tragplatte 2 relativ zum Träger 1 nicht exakt der Soll-Position entspräche. Um dies zu vermeiden, sind in den Anlageflächen 14, 15, 21, 26 mit Druckluft beaufschlagbare Anlage-Prüf-Kanäle 42 vorgesehen, von denen in der Zeichnung nur die in den unteren Anlageflächen 14 und 15 eines seitlichen Halteelements 13 dargestellt sind. Über diesen Anlage-Prüf-Kanal 42 wird nach dem Fixieren der Tragplatte 2 auf dem Träger 1 mittels der Schräg-Spann-Einrichtung 30 und der Nieder-Spann-Einrichtungen 36 Druckluft über eine Druckluft-Leitung 43 zugeführt. Tritt ein Druckabfall ein, ist dies ein Zeichen dafür, daß die jeweilige Gegenfläche 18, 19, 24, 29 nicht flächig und dicht an der Anlagefläche 14, 15, 21, 26 anliegt. Um dies zu erfassen, ist an die Leitung 43 ein Druckschalter 44 angeschlossen.

Um eine Reinigung der Anlageflächen und der Gegenflächen zu ermöglichen, sind weiterhin in den Anlageflächen 14, 15, 21, 26 Spül-Kanäle 45 vorgesehen, denen eine Spülflüssigkeit zum Reinigen der Anlageflächen bzw. der Gegenflächen über eine Spül-Leitung 46 zugeführt wird. Die Steuerung erfolgt über ein Magnet-Ventil 47 in der Leitung 46. Ein solcher Reinigungsvorgang erfolgt zweckmäßigerweise vor dem Verspannen mittels der Schräg-Spann-Einrichtung 30 und der Nieder-Spann-Einrichtungen 36. Damit ein auf den Anlageflächen 14, 15 und den Gegenflächen noch vorhandener Spülflüssigkeitsfilm eine dichte Anlage dieser Flächen nicht behindert, ist ein von dem jeweiligen Spül-Kanal 45 durch die Anlageflächen 14 bzw. 15 nach außen führender nutartiger Ableit-Kanal 48 vorgesehen.

## Patentansprüche

1. Werkstückhalter
mit einem Werkstück-Träger (1) und
mit einer Werkstück-Tragplatte (2),
wobei die Werkstück-Tragplatte (2) mit Einrichtungen zum Befestigen eines Werkstücks (6) in einer vorgegebenen Lage relativ zur Werkstück-Tragplatte (2) versehen ist,
wobei der Werkstück-Träger (1) mit derartigen Anlageflächen (14, 15, 21, 26) und die Werkstück-Tragplatte (2) mit derartigen an den Anlageflächen (14, 15, 21, 26) anliegenden Gegenflächen (18, 19, 24, 29) versehen ist, daß die Werkstück-Tragplatte (2) eine exakt vorgegebene Lage in einer ersten, einer zweiten und einer dritten Koordinaten-Richtung (x, y, z) aufweist, und
wobei Spann-Einrichtungen (30, 36) zum Verspannen der Werkstück-Tragplatte (2) gegenüber dem Werkstück-Träger (1) in der ersten, der zweiten und der dritten Koordinaten-Richtung (x, y, z) vorgesehen sind,
**dadurch gekennzeichnet,**
**dass** eine Schräg-Spann-Einrichtung (30) zum Ausrichten der **W**erkstück-Tragplatte (2) gegenüber dem Werkstück-Träger (1) in der ersten und der zweiten Koordinaten-Richtung (x, y) vorgesehen ist.

2. Werkstückhalter nach Anspruch 1, **dadurch gekennzeichnet,**
**dass** an der Werkstück-Tragplatte (2) zwei Index-Zapfen (7) zum Eingriff in Index-Bohrungen (8) des Werkstücks (6) vorgesehen sind.

3. Werkstückhalter nach Anspruch 1, **dadurch gekennzeichnet,**
**dass** mindestens eine Spann-Einrichtung (36) zum Fixieren der Werkstück-Tragplatte (2) gegenüber dem Werkstück-Träger (1) in der dritten Koordinaten-Richtung (z) vorgesehen ist.

4. Werkstückhalter nach Anspruch 1, **dadurch gekennzeichnet,**
**dass** die Schräg-Spann-Einrichtung (30) als am Werkstück-Träger (1) oder der Werkstück-Tragplatte (2) angebrachter, druckmittelbeaufschlagbarer Kolben-Zylinder-Antrieb (31) mit einem Spann-Haken (34) ausgebildet ist, der an einem an der Werkstück-Tragplatte (2) oder dem Werkstück-Träger (1) ausgebildeten Widerlager (35) angreift.

5. Werkstückhalter nach Anspruch 3, **dadurch gekennzeichnet,**
**dass** die mindestens eine Spann-Einrichtung (36) als Nieder-Spann-Einrichtung mit einem am Werkstück-Träger (1) angebrachten Schwenk-Antrieb (37) ausgebildet ist, der mit einer Spannfläche (40) gegen eine Gegen-Spannfläche (41) an der Werkstück-Tragplatte (2) anliegt.

6. Werkstückhalter nach Anspruch 1, **dadurch gekennzeichnet,**
**dass** mindestens ein Halteelement (13) am Werkstück-Träger (1) mit zwei geneigt zueinander verlaufenden Anlageflächen (14, 15) vorgesehen ist, und
**dass** an der Werkstück-Tragplatte (2) ein Gegen-Halteelement (17) mit zwei geneigt zueinander verlaufenden, den Halteflächen (14, 15) angepaßten und an den Halteflächen (14, 15) anliegenden Gegenflächen (18, 19) vorgesehen sind, wodurch die Werkstück-Tragplatte (2) gegenüber dem Werkstück-Träger (1) in der ersten oder zweiten Koordinaten-Richtung (x, y) und der dritten Koordinaten-Richtung (z) ausgerichtet wird.

7. Werkstückhalter nach Anspruch 1, **dadurch gekennzeichnet,**
**dass** in mindestens eine Anlagefläche (14, 15) ein druckmittelbeaufschlagbarer Anlage-Prüf-Kanal (42) ausmündet.

8. Werkstückhalter nach Anspruch 1, **dadurch gekennzeichnet,**
**dass** in mindestens eine Anlagefläche (14, 15) ein druckmittelbeaufschlagbarer Spül-Kanal (45) ausmündet.

9. Werkstückhalter nach Anspruch 8, **dadurch gekennzeichnet,**
**dass** in der Anlagefläche (14, 15) ausgehend von dem Spül-Kanal (45) ein die Anlagefläche (14, 15) durchquerender nutartiger Ableit-Kanal (48) ausgebildet ist.

## Claims

1. A workpiece holder, comprising
a workpiece holding fixture (1); and
a workpiece rest (2);
wherein the workpiece rest (2) is provided with arrangements for fixing a workpiece (6) in a given position relative to the workpiece rest (2);
wherein the workpiece holding fixture (1) is provided with bearing surfaces (14, 15, 21, 26) and the workpiece rest (2) with counterpart surfaces (18, 19, 24, 29) that rest on the bearing surfaces (14, 15, 21, 26) for the workpiece rest (2) to have an accurately given position in a first, second and third coordinate direction (x, y, z); and
wherein chucking appliances (30, 36) are provided, chucking the workpiece rest (2) relative to the workpiece holding fixture (1) in the first, second and third coordinate direction (x, y, z),
**characterized**
**in that** an oblique chucking appliance (30) is provided, aligning the workpiece rest (2) relative to the workpiece holding fixture (1) in the first and the second coordinate direction (x, y).

2. A workpiece holder according to claim 1, **characterized**
**in that** two index pins (7) are provided on the workpiece rest (2) for engagement with index holes (8) of the workpiece (6).

3. A workpiece holder according to claim 1, **characterized**
**in that** at least a chucking appliance (36) is provided, fixing the workpiece rest (2) relative to the workpiece holding fixture (1) in the third coordinate direction (z).

4. A workpiece holder according to claim 1, **characterized**
**in that** the oblique chucking appliance (30) is a pressure-fluid actuated piston-cylinder drive (31), which is mounted on the workpiece holding fixture (1) or the workpiece rest (2) and which has a chucking hook (34) that acts on an abutment (35) formed on the workpiece rest (2) or the workpiece holding fixture (1).

5. A workpiece holder according to claim 3, **characterized**
**in that** the at least one chucking appliance (36) is a holding-down appliance with a pivot drive mechanism (37) which is mounted on the workpiece holding fixture (1) and which, by a chucking surface (40), bears against a counterpart chucking surface (41) on the workpiece rest (2).

6. A workpiece holder according to claim 1, **characterized**
**in that** at least one holding element (13) on the workpiece holding fixture (1) is provided, having two bearing surfaces (14, 15) that incline toward one another; and
**in that,** on the workpiece rest (2), a counterpart holding element (17) is provided, having two counterpart surfaces (18, 19) that incline toward one another and are suited to the holding surfaces (14, 15), resting thereon, whereby the workpiece rest (2) is aligned relative to the workpiece holding fixture (1) in the first or second coordinate direction (x, y) and in the third coordinate direction (z).

7. A workpiece holder according to claim 1, **characterized**
**in that** a pressure-fluid actuated bearing-contact testing duct (42) opens into at least one bearing surface (14, 15).

8. A workpiece holder according to claim 1, **characterized**
**in that** a pressure-fluid actuated rinsing duct (45) opens into at least one bearing surface (14, 15).

9. A workpiece holder according to claim 8, **characterized**
**in that** a groove-type drain (48) is formed in the bearing surface (14, 15), passing from the rinsing duct (45) through the bearing surface (14, 15).

## Revendications

1. Porte-pièce composé :
d'un support de pièce (1) et
d'une plaque support de pièce (2),
dans lequel la plaque support de pièce (2) est pourvue de dispositifs afin de fixer une pièce (6) dans une position prédéfinie par rapport à la plaque support de pièce (2),
dans lequel le support de pièce (1) est pourvu de butées de référence de même genre (14, 15, 21, 26) et la plaque support de pièce (2) est pourvue de surfaces antagonistes de même genre (18, 19, 24, 29), adjacentes aux butées de référence (14, 15, 21, 26), et la plaque support de pièce (2) comporte une position exactement prédéfinie dans un premier, un deuxième et un troisième axe de coordonnées (x, y, z), et
dans lequel des dispositifs de serrage (30, 36) sont prévus afin de brider la plaque support de pièce (2) vis-à-vis du support de pièce (1) dans le premier, le deuxième et le troisième axe de coordonnées (x, y, z) ,
**caractérisé en ce que**,
un dispositif de serrage oblique (30) est prévu afin de positionner la plaque support de pièce (2) vis-à-vis du support de pièce (1) dans le premier et le deuxième axe de coordonnées (x, y).

2. Porte-pièce selon la revendication 1, **caractérisé en ce que** deux cimblots d'indexage (7) sont prévus sur la plaque support de pièce (2) afin de s'introduire dans des alésages d'indexage (8) de la pièce (6).

3. Porte-pièce selon la revendication 1, **caractérisé en ce qu'**au moins un dispositif de serrage (36) est prévu afin de fixer la plaque support de pièce (2) vis-à-vis du support de pièce (1) dans le troisième axe de coordonnées (z).

4. Porte-pièce selon la revendication 1, **caractérisé en ce que** le dispositif de serrage oblique (30) est conçu sous la forme d'un piston-cylindre (31) alimenté par un moyen de pression, placé au niveau du support de pièce (1) ou de la plaque support de pièce (2) avec un doigt de serrage (34) qui appuie contre une butée (35) formée sur la plaque support de pièce (2) ou le support de pièce (1).

5. Porte-pièce selon la revendication 3, **caractérisé en ce qu'**au moins un dispositif de serrage (36) est conçu comme dispositif de serrage inférieur avec un entraînement rotatif (37) placé sur le support de pièce (1), et possédant une surface d'appui (40) en opposition avec une surface d'appui antagoniste (41) sur la plaque support de pièce (2).

6. Porte-pièce selon la revendication 1, **caractérisé en ce qu'**au moins un élément de positionnement (13) est prévu sur le support de pièce (1) avec deux pans (14, 15) inclinés l'un vers l'autre, et
**en ce qu'**un élément de positionnement antagoniste (17) muni de deux surfaces antagonistes (18, 19) inclinées l'une vers l'autre, adaptées aux surfaces d'appui (14, 15) et adjacentes aux surfaces d'appui (14, 15) est prévu au niveau de la plaque support de pièce (2), par quoi la plaque support de pièce (2) est positionnée en face du support de pièce (1) dans le premier ou le deuxième axe de coordonnées (x, y) et le troisième axe de coordonnées (z).

7. Porte-pièce selon la revendication 1, **caractérisé en ce qu'**un canal de contrôle de l'installation (42) alimenté par un moyen de pression débouche au moins dans une butée de référence (14, 15).

8. Porte-pièce selon la revendication 1, **caractérisé en ce qu'**un canal d'injection d'eau (45) alimenté par un moyen de pression débouche dans au moins une butée de référence (14, 15).

9. Porte-pièce selon la revendication 8, **caractérisé en ce qu'**un canal de dérivation en forme de rainure (48) traversant la butée de référence (14, 15) est formé dans la butée de référence (14, 15)en partant du canal d'injection d'eau (45).
